# EUROPÄISCHE PATENTSCHRIFT

(11) **EP 1 355 792 B1**
(45) Veröffentlichungstag und Bekanntmachung des Hinweises auf die Patenterteilung: **11.05.2005**
(21) Anmeldenummer: 02704622.6
(22) Anmeldetag: 28.01.2002
(51) Int. Cl.: B60C 27/10

(54) **REIFENKETTE**
TYRE CHAIN
CHAINE POUR PNEU

(30) Priorität: 30.01.2001 DE 10105410
(43) Veröffentlichungstag der Anmeldung: 29.10.2003
(73) Patentinhaber: RUD-Kettenfabrik Rieger & Dietz GmbH U. Co., 73432 Aalen-Unterkochen (DE)
(72) Erfinder: DEGER, Werner, 73467 Kirchheim (DE); WEIDLER, Erhard, 73432 Aalen-Unterkochen (DE)
(74) Vertreter: Grünecker, Kinkeldey, Stockmair & Schwanhäusser
(86) Internationale Anmeldenummer: PCT/DE2002/000352
(87) Internationale Veröffentlichungsnummer: WO 2002/060706

(56) Entgegenhaltungen:
- DE-A- 2 651 162
- US-A- 4 390 053

## Beschreibung

### Technisches Gebiet

Die Erfindung betrifft eine Reifenkette mit im Bereich der Lauffläche eines Fahrzeugreifens zu liegen kommenden Gleitschutz- und/oder Reifenschutzelementen sowie mit im Bereich der Flanken des Fahrzeugreifens zu liegen kommenden, aus Kettengliedern bestehenden Seitennetzen, die über Anschlußorgane mit einem Haltestrang verbunden sind, wobei die Anschlußorgane jeweils eine Anschlußöse für ein Glied des Seitennetzes und eine einen Gleitsattel aufweisende Führungsöse für den Haltestrang aufweisen.

### Stand der Technik

Aus der DE-OS 26 51 162 ist eine die vorstehenden Merkmale aufweisende Reifenschutzkette mit Anschlußorganen bekannt, die eine nach Art einer Hülse mit einer konvexen Innenwand ausgebildete Führungszone aufweisen und bei denen sich an die zylindrische Außenwand der Hülse eine Lasche anschließt, die eine als Anschlußöse für ein Kettenglied nutzbare Bohrung aufweist, deren Durchmesser nur geringfügig größer ist als der Glieddrahtdurchmesser des anzuschließenden Kettengliedes, das in diesem Fall senkrecht zur Reifenflanke orientiert ist.

Die Länge des Gleitsattels der Führungsöse ist bei der bekannten Konstruktion größer als die Summe aus der Teilung t und dem doppelten Glieddrahtdurchmesser d des Haltestranges für das Laufnetz der bekannten Reifenkette.

Die bekannte Reifenkette bietet insbesondere bei Verwendung von als Halteketten ausgebildeten Haltesträngen den Vorteil, daß die Anschlußorgane Relativbewegungen gegenüber dem Haltestrang ausführen können, um der Abplattung des Reifens im Bereich seiner Aufstandsfläche gemäße Ausgleichsbewegungen der Seitennetze zu ermöglichen.

Aus der DE 31 37 311 A1 ist es außerdem bekannt, im Zusammenhang mit der Führung eines die Lauffläche eines Fahrzeugreifens passierenden Spannkettenstranges für eine Gleitschutzkette im Bereich der Lauffläche ein Führungselement anzuordnen, das nach Art einer Gleithülse mit einem Gleitsattel ausgebildet ist, dessen Länge ein ungehindertes Passieren des Spannkettenstranges sicherstellt. Dieses Führungselement besitzt ebenfalls eine Anschlußdose, die anders als bei der zuvor beschriebenen Konstruktion in der gleichen Ebene wie die von der Gleithülse gebildete Durchziehöse liegt.

Bekannt ist schließlich aus der DE 197 48 933 C1 ein Arretierelement für die Spannkette einer Reifenkette, das eine Anschlussöse für ein Kettenglied und eine Durchziehöffnung mit einem Arretierungsschlitz zur Sicherung der Lage der Spannkette aufweist.

### Darstellung der Erfindung

Der Erfindung liegt die Aufgabe zugrunde, bei einer Reifenkette der in Betracht gezogenen Gattung, bei der der Haltestrang als ein eine Überlänge aufweisender Spannstrang ausgebildet ist, einerseits ein problemloses Spannen des Kettennetzes zu ermöglichen und andererseits das Verwahren der Überlängen des Spannstranges zu erleichtern. Diese Aufgabe wird erfindungsgemäß dadurch gelöst, daß die Anschlußöse und die Führungsöse in einer gemeinsamen Ebene angeordnet sind und daß die Abmessungen der Anschlußöse deren zusätzliche Nutzung als Durchziehöse für ein zu verwahrendes Ende des als eine Überlänge aufweisender Spannstrang ausgebildeten Haltestranges ermöglichen.

Bei der erfindungsgemäßen Reifenkette erfüllt das Anschlußorgan anders als bei den bekannten Lösungen eine Doppelfunktion, indem es wie bereits dargelegt nicht nur das Spannen des Kettennetzes, sondern auch das Verwahren des Spannstranges erleichtert.

### Kurze Beschreibung der Zeichnungen

Weitere Einzelheiten und Merkmale der Erfindung ergeben sich aus den Unteransprüchen und der nachstehenden Beschreibung einer in den beigefügten Zeichnungen dargestellten besonders vorteilhaften Ausführungsform einer Reifenschutzkette. Es zeigen:
- Fig. 1: eine Draufsicht auf das äußere Seitennetz einer Reifenschutzkette mit einem die Durchziehösen der Anschlußorgane passierenden als Kette ausgebildeten Spannstrang, dessen zu verwahrendes Ende in die An schlußösen der Anschlußorgane eingefädelt ist;
- Fig. 2: in vergrößertem Maßstab eine Einzelheit II in Fig. 1;
- Fig. 3: eine perspektivische Ansicht eines an der Stelle III in Fig. 1 angeordneten Anschlußorganes in vergrößer tem Maßstab und
- Fig. 4: in vergrößertem Maßstab eine Einzelheit IV in Fig. 1.

### Wege zur Ausführung der Erfindung

In den Figuren sind mit 1 auf der Lauffläche eines nicht dargestellten Fahrzeugreifens zu liegen kommende Gleitschutz- bzw. Reifenschutzelemente bezeichnet, die an der Rückseite und der Vorderseite des Reifens durch Seitennetze gehalten werden, von denen lediglich das vordere Seitennetz 2 dargestellt ist, das in der Praxis aus ovalen Vertikalgliedern 3 und kreisringförmigen Horizontalgliedern 4 besteht. In die von Horizontalgliedern gebildeten Endglieder 5 V-förmiger Abschnitte des Seitennetzes 2 sind Anschlußorgane 6 eingeschweißt, die zur Führung eines eine Überlänge 7 aufweisenden Spannstranges 8 aus ovalen Kettengliedern dienen.

Um ein bequemes Spannen und ein problemloses Verwahren der Überlänge 7 des Spannstranges 8 zu ermöglichen, weisen die als Gesenkschmiedestücke ausgebildeten Anschlußorgane 6 jeweils eine kreisrunde Führungsöse 9 und eine birnenförmige Anschlußöse 10 auf. Die Abmessungen der Anschlußöse 10 sind hinreichend groß gewählt, um ihre zusätzliche Nutzung als Durchziehöse zu ermöglichen.

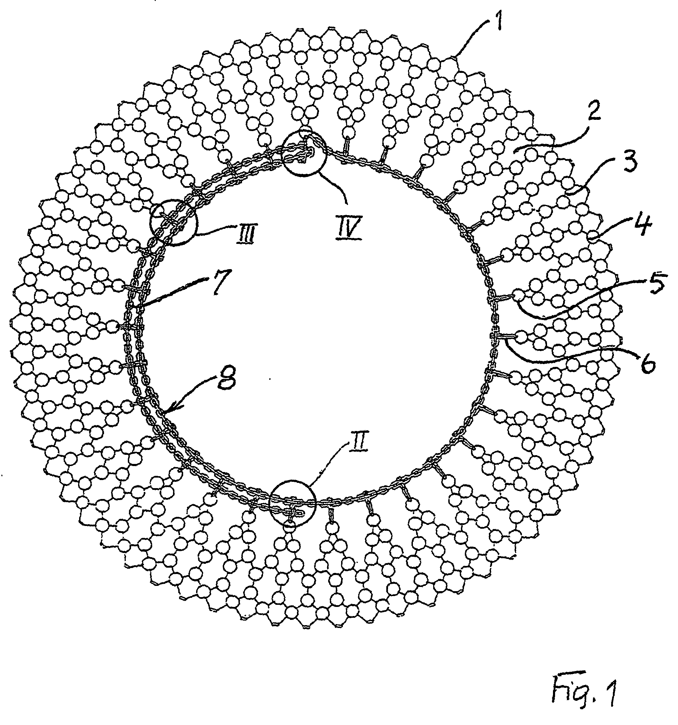

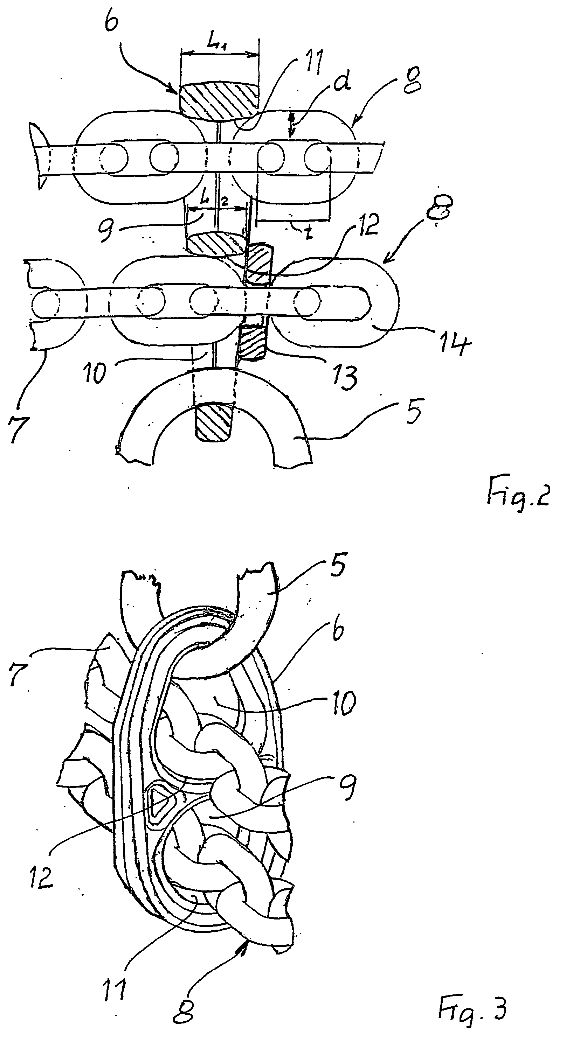

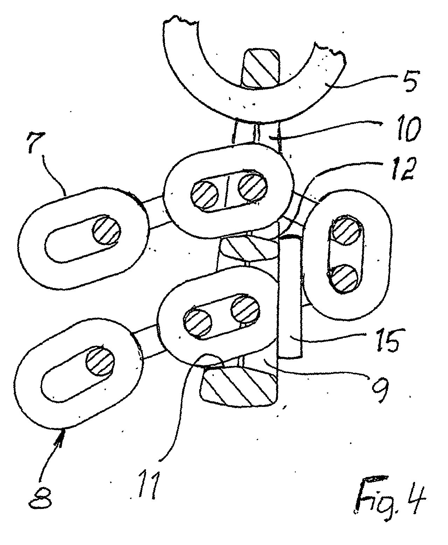

Wie aus Fig. 2 zu erkennen ist, weisen sowohl die Führungsöse 9 als auch die Anschlußöse 10 jeweils einen Gleitsattel 11 bzw. 12 auf, deren Stützlängen L₁ bzw. L₂ für die Glieder des Spannstranges 8 jeweils größer sind als die Differenz aus der Teilung t der Glieder und dem Glieddrahtdurchmesser d dieser Glieder, wobei die Stützlänge L₁ größer ist als die Stützlänge L₂. Die Längendifferenz zwischen L₁ und L₂ ist insofern gerechtfertigt und sinnvoll als die vom Spannstrang 8 während des Spannvorganges auf den Gleitsattel 11 ausgeübten, zum Zentrum des Reifens gerichteten Kräfte weit höher sind als die Kräfte, die während des Festziehens der Überlänge 7 vom Spannstrang 8 auf den Gleitsattel 12 einwirkenden Kräfte. Die unterschiedlichen Stützlängen L₁ und L₂ führen zu der aus Fig. 2 hervorgehenden Querschnittsform des Anschlußorgans 6, dessen leicht konvexe Gleitsättel 11, 12 einer Ausbildung des Anschlußorgans 6 als Gesenkschmiedeteil entgegenkommen. 13 ist ein von einem U-förmigen Bügel und einer dessen Schenkelenden überbrückenden Traverse gebildetes Sperrschloß, das das Endglied 14 der Überlänge 7 des Spannstranges 8 im gespannten Zustand arretiert.
Ein dem Sperrschloß 13 entsprechendes Sperrschloß 15 ist auch an der Stelle IV in Fig. 1 vorgesehen, wie dies die in Fig. 4 im vergrößerten Maßstab gezeigte Einzelheit erkennen läßt.

## Patentansprüche

1. Reifenkette mit im Bereich der Lauffläche eines Fahrzeugreifens zu liegen kommenden Gleitschutz- und/oder Reifenschutzelementen (1) sowie mit im Bereich der Flanken des Fahrzeugreifens zu liegen kommenden, aus Kettengliedern bestehenden Seitennetzen (2), die über Anschlußorgane (6) mit einem Haltestrang verbunden sind, wobei die Anschlußorgane jeweils eine Anschlußöse (10) für ein Glied des Seitennetzes und eine einen Gleitsattel aufweisende Führungsöse (9) für den Haltestrang aufweisen, **dadurch gekennzeichnet, daß** die Anschlußöse (10) und die Führungsöse (9) in einer gemeinsamen Ebene angeordnet sind und daß die Abmessungen der Anschlußöse (10) deren zusätzliche Nutzung als Durchziehöse für ein zu verwahrendes Ende des als eine Überlänge (7) aufweisender Spannstrang (8) ausgebildeten Haltestranges ermöglichen.

2. Reifenkette nach Anspruch 1, **dadurch gekennzeichnet, daß** auch die Anschlußöse (6) mit einem Gleitsattel (12) für den Spannstrang (8) versehen ist.

3. Reifenkette nach Anspruch 1 oder 2, **dadurch gekennzeichnet, daß** der Spannstrang (8) aus Kettengliedern besteht.

4. Reifenkette nach Anspruch 3, **dadurch gekennzeichnet, daß** die Gleitsättel (11, 12) der Führungsöse (9) und der Anschlußöse (10) Stützlängen L₁ bzw. L₂ haben, die größer sind als die Differenz aus der Teilung t der Glieder des Spannstranges (8) und dem Glieddrahtdurchmesser (d) dieser Glieder.

5. Reifenkette nach Anspruch 4, **dadurch gekennzeichnet, daß** die Stützlängen L₁ bzw. L₂ der Gleitsättel (11, 12) größer als die Teilung t der Glieder des Spannstranges (8) sind.

6. Reifenkette nach Anspruch 4, **dadurch gekennzeichnet, daß** die Stützlänge L₁ des Gleitsattels (11) der Führungsöse (9) gleich der Summe aus der Teilung t der Glieder des Spannstranges (8) und dem doppelten Glieddrahtdurchmesser d dieser Glieder ist.

7. Reifenkette nach einem der Ansprüche 1 bis 6, **dadurch gekennzeichnet, daß** jeder Gleitsattel (11, 12) ein zu den Ein- und Austrittsöffnungen der Ösen (9, 10) leicht abfallendes Stützprofil aufweist.

8. Reifenkette nach einem der Ansprüche 1 bis 7, **dadurch gekennzeichnet, daß** die Anschlußöse (10) einen im wesentlichen birnenförmigen Durchlaßquerschnitt aufweist.

9. Reifenkette nach einem der Ansprüche 1 bis 8, **dadurch gekennzeichnet, daß** die Führungsöse (9) einen kreisförmigen Durchlaßquerschnitt aufweist.

10. Reifenkette nach einem der Ansprüche 1 bis 9, **dadurch gekennzeichnet, daß** das Anschlußorgan (6) einen vom dem Seitennetz (2) zugewandten Scheitel der Anschlußöse (10) zum dem Seitennetz abgewandten Ende des Scheitels der Führungsöse (9) zunehmenden Querschnitt aufweist.

11. Reifenkette nach einem der Ansprüche 1 bis 10, **dadurch gekennzeichnet, daß** das Anschlußorgan (6) als Schmiedeteil ausgebildet ist.

## Claims

1. Tyre chain having antislip and/or tyre-protecting elements (1) which come to bear in the region of the running tread of a vehicle tyre, and having side nets (2) which come to bear in the region of the sidewalls of the vehicle tyre, and comprise chain links are connected to a securing strand via connecting elements (6), the connecting elements each having a connecting eye (10) for an element of the side net and a guide eye (9), having a sliding cradle, for the securing strand, **characterized in that** the connecting eye (10) and the guide eye (9) are arranged in a common plane and **in that** the dimensions of the connecting eye (10) permits its additional use as a threading eye for an end, which is to be stored, of the securing strand configured as a tensioning strand (8) having an excess length part (7).

2. Tyre chain according to Claim 1, **characterized in that** the connecting eye (6) is also provided with a sliding cradle (12) for the tensioning strand (8).

3. Tyre chain according to Claim 1 or 2, **characterized in that** the tensioning strand (8) comprises chain links.

4. Tyre chain according to Claim 3, **characterized in that** the sliding cradles (11, 12) of the guide eye (9) and of the connecting eye (10) have supporting lengths L₁ and L₂, respectively, which are greater than the difference between the pitch t of the elements of the tensioning strand (8) and the element-wire diameter (d) of said elements.

5. Tyre chain according to Claim 4, **characterized in that** the supporting lengths L₁ and L₂, respectively, of the sliding cradles (11, 12) are greater than the pitch t of the elements of the tensioning strand (8).

6. Tyre chain according to Claim 4, **characterized in that** the supporting length L₁ of the sliding cradle (11) of the guide eye (9) is equal to the sum of the pitch t of the elements of the tensioning strand (8) and twice the element-wire diameter d of said elements.

7. Tyre chain according to one of Claims 1 to 6, **characterized in that** each sliding cradle (11, 12) has a supporting section which tapers off slightly towards the entry and exit openings of the eyes (9, 10).

8. Tyre chain according to one of Claims 1 to 7, **characterized in that** the connecting eye (10) has a substantially pear-shaped passage cross section.

9. Tyre chain according to one of Claims 1 to 8, **characterized in that** the guide eye (9) has a circular passage cross section.

10. Tyre chain according to one of Claims 1 to 9, **characterized in that** the connecting element (6) has a cross section which increases from the apex, facing the side net (2), of the connecting eye (10) towards the end, facing away from the side net, of the apex of the guide eye (9).

11. Tyre chain according to one of Claims 1 to 10, **characterized in that** the connecting organ (6) is configured as a forged part.

## Revendications

1. Chaîne pour pneu avec des éléments antidérapants et/ou de protection des pneus (1) qui s'arrêtent dans la zone de la bande de roulement d'un pneu de véhicule ainsi qu'avec des filets latéraux (2) composés de maillons de chaîne qui s'arrêtent dans la zone des flancs du pneu de véhicule, qui sont reliés via des organes de raccordement (6) par une barrette de maintien, les organes de raccordement comportant respectivement un oeillet de raccordement (10) pour un maillon du filet latéral et un oeillet de guidage (9) comportant un étrier coulissant pour la barrette de maintien, **caractérisée en ce que** l'oeillet de raccordement (10) et l'oeillet de guidage (9) sont disposés dans un plan commun et **en ce que** les dimensions de l'oeillet de raccordement (10) permettent leur utilisation supplémentaire comme oeillet de traversée pour une extrémité à conserver de la barrette de maintien réalisée comme barrette de tension (8) comportant une surlongueur (7).

2. Chaîne pour pneu selon la revendication 1, **caractérisée en ce que** l'oeillet de raccordement (6) est également doté d'un étrier coulissant (12) pour la barrette de tension (8).

3. Chaîne pour pneu selon la revendication 1 ou 2, **caractérisée en ce que** la barrette de tension (8) est composée de maillons de chaîne.

4. Chaîne pour pneu selon la revendication 3, **caractérisée en ce que** les étriers coulissants (11, 12) de l'oeillet de guidage (9) et l'oeillet de raccordement (10) ont des longueurs d'appui L₁ ou L₂ qui sont supérieures à la différence qui résulte du pas t des maillons de la barrette de tension (8) et du diamètre du fil de maillon (d) de ces maillons.

5. Chaîne pour pneu selon la revendication 4, **caractérisée en ce que** les longueurs d'appui L₁ ou L₂ des étriers coulissants (11, 12) sont supérieures au pas t des maillons de la barrette de tension (8).

6. Chaîne pour pneu selon la revendication 4, **caractérisée en ce que** la longueur d'appui L₁ de l'étrier coulissant (11) de l'oeillet de guidage (9) est égale à la somme du pas t des maillons de la barrette de tension (8) et du double du diamètre du fil de maillon d de ces maillons.

7. Chaîne pour pneu selon une des revendications 1 à 6, **caractérisée en ce que** chaque étrier coulissant (11, 12) comporte un profil d'appui légèrement incliné en direction des orifices d'entrée et de sortie des oeillets (9, 10).

8. Chaîne pour pneu selon une des revendications 1 à 7, **caractérisée en ce que** l'oeillet de raccordement (10) comporte une section transversale de passage pour l'essentiel en forme de poire.

9. Chaîne pour pneu selon une des revendications 1 à 8, **caractérisée en ce que** l'oeillet de guidage (9) comporte une section transversale de passage en forme de cercle.

10. Chaîne pour pneu selon une des revendications 1 à 9, **caractérisée en ce que** l'organe de raccordement (6) comporte une section transversale qui augmente de la crête de l'oeillet de raccordement (10) tournée vers le filet latéral (2) à l'extrémité de la crête de l'oeillet de guidage (9) détournée du filet latéral.

11. Chaîne pour pneu selon une des revendications 1 à 10, **caractérisée en ce que** l'organe de raccordement (6) est réalisé comme pièce forgée.
